# EUROPÄISCHE PATENTSCHRIFT

(11) **EP 3 208 380 B1**
(45) Veröffentlichungstag und Bekanntmachung des Hinweises auf die Patenterteilung: **11.08.2021**
(21) Anmeldenummer: 16156102.2
(22) Anmeldetag: 17.02.2016
(51) Int. Cl.: E01C 19/48, B60W 30/18, B60K 23/08

(54) **VERFAHREN ZUM STEUERN EINES STRASSENFERTIGERS MIT RÄDERFAHRWERK UND STRASSENFERTIGER MIT RÄDERFAHRWERK**
METHOD OF CONTROLLING A ROAD PAVER WITH WHEEL RUNNING GEAR AND ROAD PAVER WITH WHEEL RUNNING GEAR
PROCEDE DE COMMANDE D'UNE FINISSEUSE DE ROUTE SUR ROUES ET FINISSEUSE DE ROUTE SUR ROUES

(43) Veröffentlichungstag der Anmeldung: 23.08.2017
(73) Patentinhaber: Joseph Vögele AG, 67075 Ludwigshafen (DE)
(72) Erfinder: EUL, Achim, 68305 Mannheim (DE)
(74) Vertreter: Grünecker Patent- und Rechtsanwälte PartG mbB

(56) Entgegenhaltungen:
- EP-A1- 2 676 831
- EP-B1- 0 743 219
- DE-A1- 3 911 229
- DE-A1-102014 010 387

## Beschreibung

Die vorliegende Erfindung betrifft einen Straßenfertiger mit antreibbaren Rädern sowie ein Verfahren zum Steuern eines solchen Straßenfertigers.

Aus der EP 0 743 219 B1 ist ein Straßenfertiger mit hinteren und vorderen Räderfahrwerken bekannt. Das hintere Fahrwerk umfasst zwei größere Räder, während das vordere Fahrwerk ein Paar kleinerer Räder umfasst. Innerhalb eines Arbeitsgeschwindigkeitsbereichs werden die hinteren Räder permanent angetrieben. Die vorderen Räder können bedarfsabhängig angetrieben werden. Es sind Sensoren zum Abtasten der Drehzahlen der Räder vorgesehen. Mittels der Sensordaten wird eine Drehzahldifferenz zwischen den vorderen und den hinteren Rädern erfasst und werden die Drehzahlen der vorderen und hinteren Räder entsprechend korrigiert.

Die EP 2 676 831 A1 offenbart ein Fahrzeug mit Allradantrieb mit einem System zum Verteilen eines Antriebsdrehmoments auf die einzelnen Räder antreibende Elektromotoren. Es wird die Fahrzeuggeschwindigkeit bestimmt. Zudem werden mit Sensoren die Umlaufgeschwindigkeiten der antreibenden Räder bestimmt. Basierend auf den Umlaufgeschwindigkeiten und der Fahrzeuggeschwindigkeit wird ein Schlupfverhältnis der Räder berechnet. Unter Berücksichtigung dieses Schlupfverhältnisses wird eine Drehmomentausgabe an die einzelnen Räder verteilt.

Es ist Aufgabe der vorliegenden Erfindung, einen Straßenfertiger mit antreibbaren Rädern sowie ein Verfahren zum Steuern eines Straßenfertigers mit antreibbaren Rädern bereitzustellen, die in Bezug auf das Antreiben des Straßenfertigers verbessert sind.

Diese Aufgabe wird durch das Verfahren gemäß Anspruch 1 sowie durch den Straßenfertiger gemäß Anspruch 8 gelöst. Die abhängigen Ansprüche geben vorteilhafte Ausführungsformen der Erfindung an.

Der bei dem erfindungsgemäßen Verfahren gesteuerte Straßenfertiger und der erfindungsgemäße Straßenfertiger weisen einen vorzugsweise in Einbaufahrtrichtung des Straßenfertigers vorne gelegenen Gutbunker zur Aufnahme von Einbaugut auf, insbesondere von bituminösem Einbaugut. Vorzugsweise in Fahrtrichtung hinten ist an dem Straßenfertiger eine Einbaubohle zum Verdichten des Einbauguts vorgesehen. Der Straßenfertiger umfasst ein antreibbares Hinterrad und ein antreibbares Vorderrad zum Fortbewegen des Straßenfertigers. Vorzugsweise sind zumindest zwei jeweils paarweise angeordnete Hinterräder und Vorderräder vorgesehen. Zwei paarweise vorgesehene Hinterräder können zusammen oder separat antreibbar sein. Auch zwei paarweise vorgesehene Vorderräder können zusammen oder separat antreibbar sein. Dabei kann es vorteilhaft sein, wenn ein Raddurchmesser der Hinterräder größer ist als ein Raddurchmesser der Vorderräder. Um die Stabilität des Straßenfertigers zu erhöhen, kann es vorteilhaft sein, wenn zwei Paare von Vorderrädern vorgesehen sind. Dabei kann zumindest eines der Paare von Vorderrädern antreibbar sein, vorzugsweise das hintere Paar von Vorderrädern. Alternativ können beide Paare von Vorderrädern antreibbar sein, insbesondere separat oder zusammen antreibbar.

Gemäß eines ersten Aspekts der Erfindung wird nun ein Verfahren zum Steuern eines solchen Straßenfertigers bereitgestellt. Dabei wird eine Umlaufgeschwindigkeit eines Hinterrads des Straßenfertigers gemessen. Dies kann durch eine Rad-Sensoreinheit geschehen, die beispielsweise einen optischen Sensor aufweisen kann. Es ist auch denkbar, die Umlaufgeschwindigkeit zweier Hinterräder, insbesondere zweier antreibbarer Hinterräder, des Straßenfertigers zu messen.

Im Sinn der Erfindung soll der Begriff "Umlaufgeschwindigkeit" eines Rades die Winkelgeschwindigkeit des Rades umfassen. Zudem soll der Begriff "Umlaufgeschwindigkeit" des Rades alle Werte bzw. Messwerte umfassen, aus denen sich die Winkelgeschwindigkeit des Rades bei gleichförmiger Bewegung unter Kenntnis des Raddurchmessers, insbesondere unter Kenntnis lediglich des Raddurchmessers, herleiten lässt, so z. B. die Umlauffrequenz des Rads oder der zeitliche Verlauf der Position eines bestimmten Messpunktes auf dem Rad.

Erfindungsgemäß wird weiterhin die Fahrgeschwindigkeit des Straßenfertigers gemessen, insbesondere durch eine Fahrgeschwindigkeits-Sensoreinheit. Die Fahrgeschwindigkeit des Straßenfertigers bezeichnet die Geschwindigkeit, mit der sich der Straßenfertiger als Ganzes über einen Untergrund bewegt.

Basierend auf der gemessenen Umlaufgeschwindigkeit des Hinterrads und der gemessenen Fahrgeschwindigkeit des Straßenfertigers wird erfindungsgemäß, vorzugsweise durch eine Steuereinheit des Straßenfertigers, ein Soll-Antriebsmoment für das Vorderrad des Straßenfertigers berechnet. Auf dieses berechnete Soll-Antriebsmoment wird, vorzugsweise ebenfalls durch die Steuereinheit, ein Ist-Antriebsmoment des Vorderrads eingestellt. Dazu kann eine Antriebseinrichtung des Vorderrads angesteuert werden, vorzugsweise über einen Regelmechanismus.

Das Ist-Antriebsmoment des Vorderrads wird also basierend auf der Umlaufgeschwindigkeit des Hinterrads und der Fahrgeschwindigkeit des Straßenfertigers eingestellt. Die Erfindung erlaubt ein automatisches Einstellen des Antriebsmoments des Vorderrads. Gegenüber beispielsweise einer manuellen Einstellung nach Erfahrungswerten ist der Antrieb des Vorderrads bei dem erfindungsgemäßen Verfahren jeweils auf die tatsächliche momentane Betriebssituation abgestimmt, wodurch ein Verschleiß der Räder und anderer Bauteile reduziert und die Energieeffizienz des Straßenfertigers erhöht werden kann.

Durch das erfindungsgemäße Berücksichtigen der gemessenen Fahrgeschwindigkeit des Straßenfertigers zusätzlich zu der Umlaufgeschwindigkeit des Hinterrads kann ein möglicherweise auftretender Schlupf des Hinterrads mit berücksichtigt werden. Dadurch kann die ungewünschte Situation vermieden werden, dass eine gemessene Umlaufgeschwindigkeit eines (teilweise) durchdrehenden Hinterrads ohne Korrektur in die Berechnung des Soll-Antriebsmoments für das Vorderrad einfließt. Dadurch wird die Ansteuerung des Vorderrads weiter an die konkrete Betriebssituation angepasst und in Bezug auf Verschleiß und Energieeffizienz verbessert.

Besonders im Bereich von Straßenfertigern, die sich typischerweise während des Einbauvorgangs mit sehr geringen Arbeitsgeschwindigkeiten fortbewegen, beispielsweise mit Arbeitsgeschwindigkeiten im Bereich von 1-20 m/min, ist die Bestimmung der Fahrgeschwindigkeit des Straßenfertigers mit ausreichender Genauigkeit mit Schwierigkeiten verbunden. Vorteilhafterweise wird die Fahrgeschwindigkeit des Straßenfertigers mit einer an dem Straßenfertiger vorgesehenen, zumindest einen Radarsensor aufweisenden Fahrgeschwindigkeits-Sensoreinheit gemessen. Die Bestimmung der Fahrgeschwindigkeit des Straßenfertigers mittels eines Radarsensors weist auch bei den für Straßenfertiger typischen geringen Einbaugeschwindigkeiten eine hohe Genauigkeit auf. Zudem ist durch Radarsensoren ein Beobachten der Fahrgeschwindigkeit des Straßenfertigers in Echtzeit möglich. Geschwindigkeitsänderungen des Straßenfertigers werden nahezu instantan gemessen, was für ein optimal situationsangepasstes Ansteuern des Vorderrads vorteilhaft ist.

Der Radarsensor ist vorzugsweise dazu ausgelegt, elektromagnetische Strahlung derart zu emittieren, dass diese von dem Untergrund, auf dem sich der Straßenfertiger bewegt, zurückgeworfen wird. Die zurückgeworfene Strahlung wird dann wiederum von dem Radarsensor detektiert. Über eine Dopplerverschiebung zwischen dem emittierten und dem detektierten Signal kann auf die Fahrgeschwindigkeit des Straßenfertigers geschlossen werden. Um diese Funktionalität zu gewährleisten, kann die Detektionsrichtung und/oder die Emissionsrichtung des zumindest einen Radarsensors gegenüber einer horizontale Ebene nach unten geneigt sein.

Die Genauigkeit der Fahrgeschwindigkeitsmessung kann weiter erhöht werden, wenn die Fahrgeschwindigkeits-Sensoreinheit zwei Radarsensoren umfasst. Dabei kann ein erster Radarsensor in Fahrtrichtung des Straßenfertigers nach vorne gerichtet angeordnet sein, während ein zweiter Radarsensor in Fahrtrichtung des Straßenfertigers nach hinten gerichtet ist. Auch hier sollten beide Radarsensoren gegenüber einer horizontalen Ebene nach unten geneigt sein, beispielsweise um einen Winkel zwischen 0° und 90°, bevorzugt um einen Winkel zwischen 25° und 75°. Die gemessene Fahrgeschwindigkeit kann aus den einzelnen Messwerten der beiden Radsensoren über eine Mittelwertbildung bestimmt werden.

Der Schritt des Berechnens des Soll-Antriebsmoments des Vorderrads umfasst das Bestimmen eines tatsächlich übertragenen Antriebsmoments des Hinterrads, basierend auf der gemessenen Umlaufgeschwindigkeit des Hinterrads und der gemessenen Fahrgeschwindigkeit des Stra-ßenfertigers. Darauf basierend wird das Soll-Antriebsmoment des Vorderrads proportional zu dem bestimmten tatsächlich übertragenen Antriebsmoment des Hinterrads gesetzt. Auch diese Vorgänge sind vorzugsweise durch die Steuereinheit des Straßenfertigers auszuführen. Durch das Bestimmen des tatsächlich übertragenen Antriebsmoments des Hinterrads wird ein Schlupf des Hinterrads basierend auf der gemessenen Fahrgeschwindigkeit des Straßenfertigers berücksichtigt. Durch das Einstellen des Antriebsmoments des Vorderrads proportional zu dem tatsächlich übertragenen Antriebsmoment des Hinterrads kann der Vorderradantrieb gezielt zur Unterstützung des Hinterradantriebs eingesetzt werden. Je nach konkretem Einsatzgebiet kann dabei über eine geeignete Proportionalitätskonstante das Ausmaß der Unterstützung festgelegt werden.

Vorteilhafterweise umfasst der Schritt des Bestimmens des tatsächlich übertragenen Antriebsmoments des Hinterrads das Bestimmen eines Schlupfes des Hinterrads basierend auf der gemessenen Umlaufgeschwindigkeit des Hinterrads und der gemessenen Fahrgeschwindigkeit, vorzugsweise ebenfalls durch die Steuereinrichtung. Zur Bestimmung des Schlupfes des Hinterrads kann dabei basierend auf den bekannten Dimensionen des Hinterrads zunächst bestimmt werden, mit welcher Winkelgeschwindigkeit, Umlaufgeschwindigkeit, Umlauffrequenz oder Ähnlichem sich das Hinterrad bewegen würde, wenn die Rollbedingung für das Hinterrad erfüllt wäre und sich der Straßenfertiger mit der gemessenen Fahrgeschwindigkeit fortbewegt. Dieser Wert kann dann mit der gemessenen Umlaufgeschwindigkeit des Hinterrads verglichen werden, um den Schlupf des Hinterrads zu erhalten. Mit Hilfe des bestimmten Schlupfes des Hinterrads kann dann, vorzugsweise durch die Steuereinheit, aus einem gespeicherten Datensatz, insbesondere einem Kennlinienfeld, das tatsächlich übertragene Antriebsmoment des Hinterrads bestimmt oder ausgelesen werden, um für das Bestimmen des Ist-Antriebsmoments des Vorderrads zur Verfügung zu stehen. Der gespeicherte Datensatz kann vorbestimmte Werte für das tatsächlich übertragene Antriebsmoment des Hinterrads in Abhängigkeit von dem Schlupf des Hinterrads umfassen. Es können für einen gegebenen Schlupf auch mehrere Werte für das tatsächlich übertragene Antriebsmoment des Hinterrads gespeichert sein, die abhängig von weiteren, momentan vorliegenden Betriebsbedingungen des Straßenfertigers ausgewählt werden.

Besonders vorteilhaft ist es, wenn die Umlaufgeschwindigkeiten zweier Hinterräder des Straßenfertigers, vorzugsweise unabhängig voneinander, gemessen werden. Dies kann beispielsweise durch eine weitere Rad-Sensoreinheit an einem zweiten antreibbaren Hinterrad erfolgen. Die so gemessenen Umlaufgeschwindigkeiten der beiden Hinterräder können dann, insbesondere durch die Steuereinheit, miteinander verglichen werden. Vorzugsweise wird das Sollantriebsmoment des Vorderrads des Straßenfertigers dann, wie oben beschrieben, basierend auf der kleineren der gemessenen Umlaufgeschwindigkeiten der Hinterräder bestimmt. Dieses Vorgehen führt vor Allem dann zu verbesserten Ergebnissen, wenn an den beiden Hinterrädern ein unterschiedliche großer positiver Schlupf (also zumindest teilweises Durchdrehen des Rads) vorliegt oder lediglich an einem Hinterrad positiver Schlupf vorliegt. Es wird gewährleistet, dass zur Berechnung des Soll-Antriebsmoments des Vorderrads die an dem Rad mit geringerem positiven Schlupf vorliegenden Gegebenheiten berücksichtigt werden. Damit kann eine angemessene und ausreichende Unterstützung der Hinterräder durch die Vorderräder erreicht werden.

Gemäß eines zweiten Aspekts betrifft die vorliegende Erfindung einen Straßenfertiger der bereits oben als erfindungsgemäß beschriebenen Art. Der Straßenfertiger weist weiterhin die Rad-Sensoreinheit zum Messen einer Umlaufgeschwindigkeit des Hinterrads sowie die Fahrgeschwindigkeits-Sensoreinheit zum Messen einer Fahrgeschwindigkeit des Straßenfertigers auf. Die Fahrgeschwindigkeits-Sensoreinheit weist vorzugsweise einen Radarsensor auf. Weitere vorteilhafte Ausführungen der Fahrgeschwindigkeits-Sensoreinheit wurden bereits bezüglich des Verfahrens beschrieben. Zudem weist der Straßenfertiger die Steuereinheit auf, die zum Berechnen des Soll-Antriebsmoment des Vorderrads basierend auf der gemessenen Umlaufgeschwindigkeit des Hinterrads und der gemessenen Fahrgeschwindigkeit des Straßenfertigers sowie zum Einstellen des Ist-Antriebsmoments des Vorderrads auf das berechnete Soll-Antriebsmoment konfiguriert ist. Vorteilhafterweise ist die Steuereinheit zum Ausführen weiterer in Bezug auf das erfindungsgemäße Verfahren als von der Steuereinheit ausführbar beschriebener Schritte konfiguriert.

Der erfindungsgemäße Straßenfertiger ist zum Durchführen des erfindungsgemäßen Verfahrens geeignet. Gleichermaßen ist das erfindungsgemäße Verfahren zum Steuern des erfindungsgemäßen Straßenfertigers geeignet.

Im Folgenden soll die Erfindung anhand eines Ausführungsbeispiels mithilfe der Figuren näher erläutert werden. Dabei zeigen:
- Figur 1: eine schematische Darstellung eines erfindungsgemäßen Straßenfertigers;
- Figur 2: eine schematische Darstellung der Einbettung der Steuereinheit in die Systeme eines erfindungsgemäßen Straßenfertigers;
- Figur 3: eine schematische Darstellung einer Fahrgeschwindigkeits-Sensoreinheit eines erfindungsgemäßen Straßenfertigers gemäß einer Ausführungsform mit zwei Radarsensoren; und
- Figur 4: Ein Flussdiagramm zur Erläuterung des Bestimmens des Soll-Antriebsmoments für das Vorderrad gemäß einer Ausführungsform des erfindungsgemäßen Verfahrens.

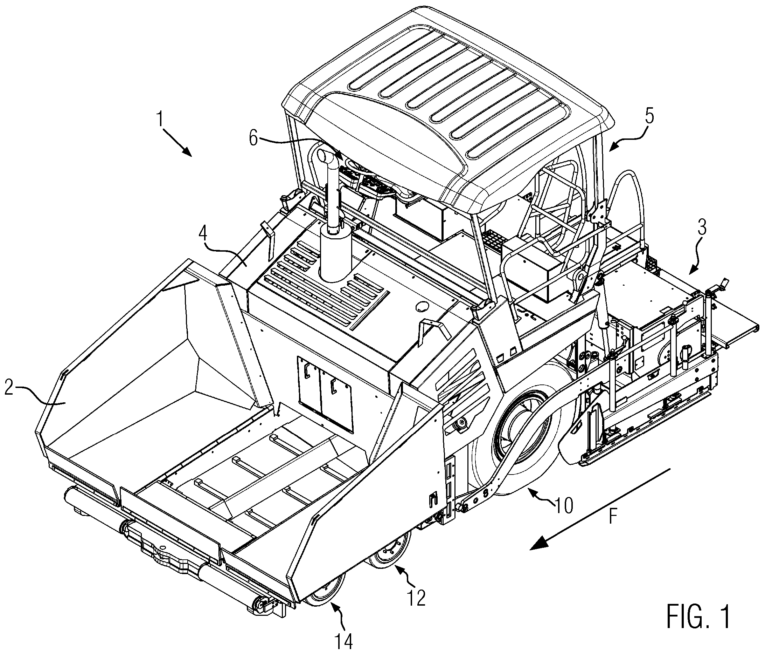

Fig. 1 zeigt einen erfindungsgemäßen Straßenfertiger 1. Dieser weist in Einbaufahrtrichtung F vorne einen Gutbunker 2 zur Aufnahme von Einbaugut auf. In Einbaufahrtrichtung F hinten ist an dem Straßenfertiger 1 eine Einbaubohle 3 zum Verdichten des Einbauguts angebracht. Der Straßenfertiger 1 umfasst ein Chassis 4 sowie einen darauf angebrachten Bedienstand 5 mit Bedienelementen 6 zum Steuern des Straßenfertigers 1. Der Straßenfertiger 1 gemäß der gezeigten Ausführungsform weist zwei antreibbare Hinterräder 10 auf. In Einbaufahrtrichtung F vor den Hinterrädern 10 weist der Straßenfertiger 1 zwei antreibbare Vorderräder 12 auf. Die Hinterräder 10 können dabei entweder gemeinsam oder separat antreibbar sein. Auch die Vorderräder 12 können gemeinsam oder separat antreibbar sein. Der gezeigte Straßenfertiger 1 weist zur weiteren Stabilisierung ein zweites Paar von Vorderrädern 14 auf. Dieses kann antreibbar oder nicht antreibbar sein oder kann auch ganz weggelassen werden.

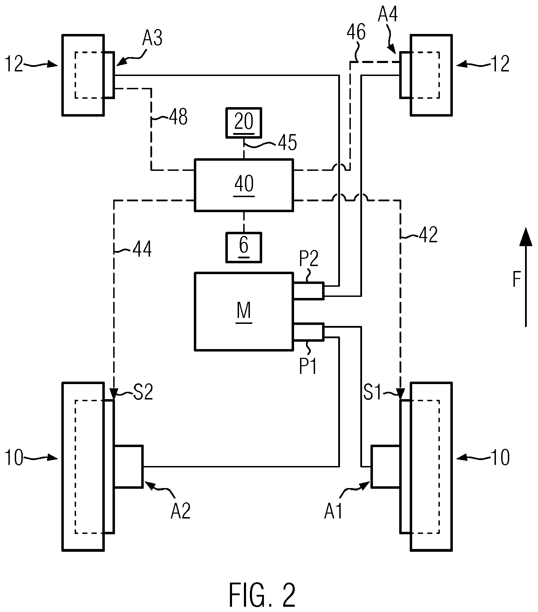

In der in Fig. 2 gezeigten Ausführungsform sind die beiden Hinterräder 10 des Straßenfertigers 1 entlang einer gemeinsamen Achse angeordnet und verfügen jeweils über ein eigenes Antriebsaggregat A1, A2, beispielsweise Hydraulikmotoren. Auch das Paar von antreibbaren Vorderrädern 12 ist entlang einer gemeinsamen Achse angeordnet und separat über jeweils ein eigenes Antriebsaggregat A3, A4 antreibbar. Auch hier ist es denkbar, Hydraulikmotoren einzusetzen. Die Antriebsaggregate A1, A2, A3, A4 werden jeweils von einem Motor M des Straßenfertigers 1 angetrieben. Wenn die Antriebaggregate A1, A2, A3, A4 als Hydraulikmotoren ausgebildet sind, können zwischen dem Motor M und den jeweiligen Antriebsaggregaten A1, A2, A3, A4 eine oder mehrere Hydraulikpumpen P1, P2 geschaltet sein. Dieser werden von dem Motor M angetrieben und treiben wiederum eine oder mehrere der Antriebsaggregate A1, A2, A3, A4 an. In der gezeigten Ausführungsform sind zwei Hydraulikpumpen P1, P2 vorgesehen, wobei eine erste Hydraulikpumpe P1 die Antriebsaggregate A1, A2 der Hinterräder 10 antreibt und eine zweite Hydraulikpumpe P2 die Antriebsaggregate A3, A4 der Vorderräder 12 antreibt.

An den Hinterrädern 10 ist jeweils eine Rad-Sensoreinheit S1, S2 zum Messen der Umlaufgeschwindigkeit des zugeordneten Hinterrads 10 vorgesehen. Es ist auch denkbar, dass lediglich an einem Hinterrad 10 eine Rad-Sensoreinheit S1, S2 vorgesehen ist.

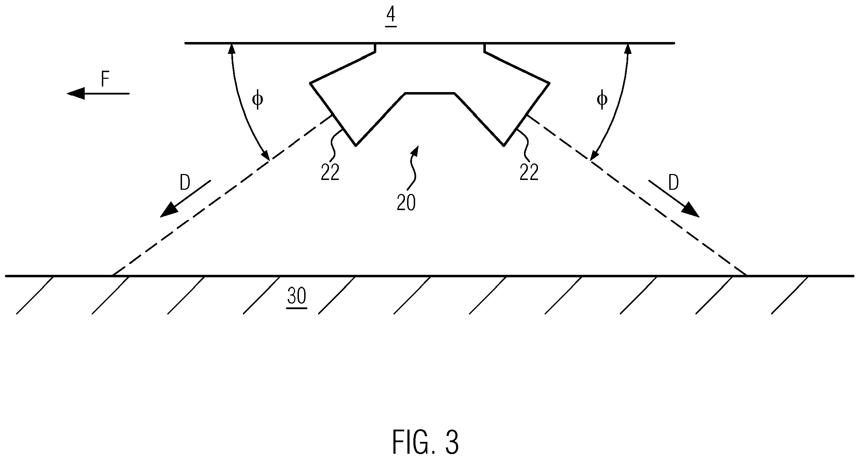

Zudem umfasst der erfindungsgemäße Straßenfertiger 1 eine Fahrgeschwindigkeits-Sensoreinheit 20 zum Messen einer Fahrgeschwindigkeit des Straßenfertigers 1. Eine solche Fahrgeschwindigkeits-Sensoreinheit 20 ist in Fig. 3 weiter detailliert dargestellt. Vorteilhafterweise weist die Fahrgeschwindigkeits-Sensoreinheit 20 zumindest einen Radarsensor 22 auf. Gemäß der in Fig. 3 gezeigten vorteilhaften Ausführungsform umfasst die Fahrgeschwindigkeits-Sensoreinheit 20 zwei Radarsensoren 22. Diese können vorteilhafterweise an einer Unterseite des Chassis 4 des Straßenfertigers 1 angebracht sein. Es ist auch denkbar, die Fahrgeschwindigkeits-Sensoreinheit 20 seitlich an dem Straßenfertiger 1 anzubringen. Die Wirkungsweise der Radarsensoren 22 basiert auf dem Ausnutzen des Dopplereffekts. Die Radarsensoren 22 sind in der Lage, elektromagnetische Strahlung in eine Detektionsrichtung D zu emittieren. Wie in Fig. 3 gezeigt, sind die Detektionsrichtungen D der Radarsensoren 22 gegenüber einer horizontalen Ebene um einen Winkel Φ nach unten geneigt an dem Straßenfertiger angebracht. Damit ist gewährleistet, dass die emittierte elektromagnetische Strahlung von dem Untergrund 30, auf dem sich der Straßenfertiger 1 bewegt, reflektiert wird. Die reflektierte Strahlung wird dann von dem jeweiligen Radarsensor 22 wieder detektiert. Dabei wird die Frequenz der detektierten Strahlung gemessen. Aus dem Unterschied der Frequenz der detektierten elektromagnetischen Strahlung zu der bekannten Frequenz der ursprünglich emittierten elektromagnetischen Strahlung kann unter Zuhilfenahme des bekannten Neigungswinkels Φ der Detektionsrichtung D des Radarsensors 22 die Fahrgeschwindigkeit des Straßenfertigers 1 ermittelt werden. Sind, wie in Fig. 3 gezeigt, zwei Radarsensoren 22 vorgesehen, kann die Messgenauigkeit erhöht werden und die Messung unabhängiger von Unregelmäßigkeiten im Boden werden. Dazu kann beispielsweise über die erhaltenen Messwerte gemittelt werden.

Die Messwerte der Rad-Sensoreinheiten S1, S2 der Hinterräder 10 sowie der Messwert der Fahrgeschwindigkeits-Sensoreinheit 20 werden einer Steuereinheit 40 über entsprechende in Figur 2 gezeigte Datenleitungen 42, 44, 45 zugeführt. Basierend auf der gemessenen Umlaufgeschwindigkeit zumindest eines Hinterrads 10 und der gemessenen Fahrgeschwindigkeit des Straßenfertigers 1 berechnet die Steuereinheit 40 ein Soll-Antriebsmoment. Dieses Soll-Antriebsmoment wird über Steuerleitungen 46, 48 an das Antriebsaggregat A3, A4 zumindest eines Vorderrads 12 als Soll-Antriebsmoment zum Einstellen eines Ist-Antriebsmoments des Vorderrads 12 ausgegeben. Wie in Fig. 2 gezeigt, kann das Soll-Antriebsmoment auch an beide Vorderräder 12 bzw. deren Antriebaggregate A3, A4 ausgegeben werden.

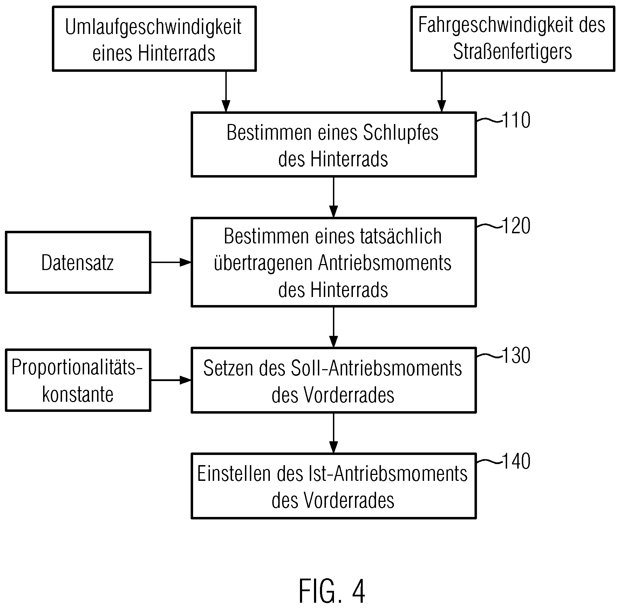

In Fig. 4 wird detaillierter erläutert, wie aus der gemessenen Umlaufgeschwindigkeit des zumindest einen Hinterrads 10 sowie der gemessenen Fahrgeschwindigkeit des Straßenfertigers 1 die Steuerung des Ist-Antriebsmoments des zumindest einen Vorderads 12 vorgenommen wird. Zunächst wird in Schritt 110 aus der Umlaufgeschwindigkeit des Hinterrads 10 sowie der Fahrgeschwindigkeit des Straßenfertigers 1 der Schlupf des betreffenden Hinterrads 12 bestimmt. Werden, wie in Figur 2 gezeigt, die Umlaufgeschwindigkeiten von zwei Hinterrädern 10 bestimmt, kann für Schritt 110 und das weitere Verfahren der kleinere bestimmte Wert verwendet werden. In Schritt 120 wird ein zu dem Schlupf des Hinterrads 12 korrespondierendes tatsächlich übertragenes Antriebsmoment des Hinterrads 12 aus einem gespeicherten Datensatz ausgelesen. In Schritt 130 wird das Soll-Antriebsmoment des Vorderrads 12 gesetzt. Dabei wird das Soll-Antriebsmoment des zumindest einen Vorderrads 12 durch Multiplikation des aus dem Datensatz ausgelesenen tatsächlich übertragenen Antriebsmoments des Hinterrads 10 mit einer Proportionalitätskonstanten erhalten. Wie bereits erläutert, wird dann in Schritt 140 das Ist-Antriebsmoment des zumindest einen Vorderrades 12 auf das berechnete Soll-Antriebsmoment eingestellt. Dies geschieht durch Ausgabe des Ist-Antriebsmoments von der Steuereinheit 40 über die Steuerleitungen 46, 48 an die entsprechende Antriebseinheit A3, A4 des zumindest einen Vorderrads 12. Die Antriebseinheiten A3, A4 können einen entsprechenden Regelmechanismus umfassen, der dazu ausgelegt ist, das Ist-Antriebsmoment des entsprechenden Vorderrads 12 auf das von der Steuereinheit 40 bereitgestellte Soll-Antriebsmoment einzustellen.

Es ist denkbar, dass der gespeicherte Datensatz durch einen Benutzer angepasst oder neu eingegeben werden kann. Dies kann beispielsweise über die Bedienelemente 6 des Straßenfertigers erfolgen. Ebenso ist es denkbar, dass ein Bediener, vorzugsweise ebenfalls über die Bedienelemente 6, die in Schritt 120 verwendete Proportionalitätskontante anpassen kann.

## Patentansprüche

1. Verfahren zum Steuern eines Straßenfertigers (1) mit einem Gutbunker (2) zur Aufnahme von Einbaugut, einer Einbaubohle (3) zum Verdichten von Einbaugut, einem antreibbaren Hinterrad (10) und einem antreibbaren Vorderrad (12), umfassend:
Messen einer Umlaufgeschwindigkeit des Hinterrads (10),
**gekennzeichnet durch**
Messen einer Fahrgeschwindigkeit des Straßenfertigers (1);
Berechnen eines Soll-Antriebsmoments des Vorderrads (12) basierend auf der gemessenen Umlaufgeschwindigkeit des Hinterrads (10) und der gemessenen Fahrgeschwindigkeit des Straßenfertigers (1); und
Einstellen eines Ist-Antriebsmoments des Vorderrads (12) auf das berechnete Soll-Antriebsmoment,
wobei der Schritt des Berechnens des Soll-Antriebsmöments umfasst:
Bestimmen eines tatsächlich übertragenen Antriebsmoments des Hinterrads (10) basierend auf der gemessenen Umlaufgeschwindigkeit des Hinterrads (10) und der gemessenen Fahrgeschwindigkeit des Straßenfertigers (1); und
Setzen des Soll-Antriebsmoments des Vorderrads (12) proportional zu dem bestimmten tatsächlich übertragenen Antriebsmoment des Hinterrads (10).

2. Verfahren nach Anspruch 1, **dadurch gekennzeichnet, dass** die Fahrgeschwindigkeit des Straßenfertigers (1) mit einer an dem Straßenfertiger (1) vorgesehenen, zumindest einen Radarsensor (22) aufweisenden Fahrgeschwindigkeits-Sensoreinheit (20) gemessen wird.

3. Verfahren nach Anspruch 2, **dadurch gekennzeichnet, dass** eine Detektionsrichtung (D) des zumindest einen Radarsensors (22) gegenüber einer horizontalen Ebene nach unten geneigt ist.

4. Verfahren nach Anspruch 2 oder 3, **dadurch gekennzeichnet, dass** die Fahrgeschwindigkeits-Sensoreinheit (20) zwei Radarsensoren (22) umfasst, wobei ein erster Radarsensor (22) in Fahrtrichtung (F) nach vorne gerichtet an dem Straßenfertiger (1) angeordnet ist und ein zweiter Radarsensor (22) in Fahrtrichtung (F) nach hinten gerichtet an dem Straßenfertiger (1) angeordnet ist.

5. Verfahren gemäß einem der vorangehenden Ansprüche, **dadurch gekennzeichnet, dass** der Schritt des Bestimmens des tatsächlich übertragenen Antriebsmoments des Hinterrads (10) umfasst:
Bestimmen eines Schlupfes des Hinterrads (10) basierend auf der gemessenen Umlaufgeschwindigkeit des Hinterrads (10) und der gemessenen Fahrgeschwindigkeit; und
Bestimmen eines zu dem bestimmten Schlupf des Hinterrads (10) korrespondierenden tatsächlich übertragenen Antriebsmoments des Hinterrads (10) mittels eines gespeicherten Datensatzes.

6. Verfahren gemäß Anspruch 5, **dadurch gekennzeichnet, dass** es sich bei dem gespeicherten Datensatz um ein Kennlinienfeld handelt.

7. Verfahren gemäß einem der vorangehenden Ansprüche, **dadurch gekennzeichnet, dass** die Umlaufgeschwindigkeit zweier Hinterräder (10) des Straßenfertigers (1) gemessen wird; und
das Soll-Antriebsmoment des Vorderrads (12) des Straßenfertigers (1) basierend auf einer kleineren der gemessenen Umlaufgeschwindigkeiten der Hinterräder (10) bestimmt wird.

8. Straßenfertiger (1), mit:
einem Gutbunker (2) zur Aufnahme von Einbaugut;
einer Einbaubohle (3) zum Verdichten von Einbaugut;
einem antreibbaren Hinterrad (10);
einem antreibbaren Vorderrad (12); und
einer Rad-Sensoreinheit (S1, S2) zum Messen einer Umlaufgeschwindigkeit des Hinterrads (10),
**gekennzeichnet durch**
eine Fahrgeschwindigkeits-Sensoreinheit (20) zum Messen einer Fahrgeschwindigkeit des Straßenfertigers (1); und
eine Steuereinheit (40), die konfiguriert ist zum:
Berechnen eines Soll-Antriebsmoments des Vorderrads (12) basierend auf der gemessenen Umlaufgeschwindigkeit des Hinterrads (10) und der gemessenen Fahrgeschwindigkeit des Straßenfertigers (1); und
Einstellen eines Ist-Antriebsmoments des Vorderrads (12) auf das berechnete Soll-Antriebsmoment,
wobei die Steuereinheit (40) dazu konfiguriert ist, beim Berechnen des Soll-Antriebsmoments Folgendes durchzuführen:
Bestimmen eines tatsächlich übertragenen Antriebsmoments des Hinterrads (10) basierend auf der gemessenen Umlaufgeschwindigkeit des Hinterrads (10) und der gemessenen Fahrgeschwindigkeit des Straßenfertigers (1); und
Setzen des Soll-Antriebsmoments proportional zu dem bestimmten tatsächlich übertragenen Antriebsmoment des Hinterrads (10).

9. Straßenfertiger gemäß Anspruch 8, **dadurch gekennzeichnet, dass** die Fahrgeschwindigkeits-Sensoreinheit (20) zumindest einen Radarsensor (22) aufweist.

10. Straßenfertiger gemäß Anspruch 9, **dadurch gekennzeichnet, dass** eine Detektionsrichtung (D) des zumindest einen Radarsensors (22) gegenüber einer horizontalen Ebene nach unten geneigt ist.

11. Straßenfertiger nach einem der Ansprüche 8 bis 10, **dadurch gekennzeichnet, dass** die Fahrgeschwindigkeits-Sensoreinheit (20) zwei Radarsensoren (22) umfasst, wobei ein erster Radarsensor (22) in Fahrtrichtung (F) nach vorne gerichtet an dem Straßenfertiger (1) angeordnet ist und ein zweiter Radarsensor (22) in Fahrtrichtung (F) nach hinten gerichtet an dem Straßenfertiger (1) angeordnet ist.

12. Straßenfertiger gemäß einem der Ansprüche 8 bis 11, **dadurch gekennzeichnet, dass** die Steuereinheit (40) dazu konfiguriert ist, beim Bestimmen des tatsächlich übertragenen Antriebsmoments des Hinterrads (10) Folgendes durchzuführen:
Bestimmen eines Schlupfes des Hinterrads (10) basierend auf der gemessenen Umlaufgeschwindigkeit des Hinterrads (10) und der gemessenen Fahrgeschwindigkeit;
Bestimmen des zu dem bestimmten Schlupf des Hinterrads (10) korrespondierenden tatsächlich übertragenen Antriebsmoments des Hinterrads (10) mittels eines in einem Kennlinienfeld-Speicher des Straßenfertigers (1) gespeicherten Datensatzes.

13. Straßenfertiger gemäß einem der Ansprüche 8 bis 12, der zudem ein weiteres antreibbares Hinterrad (10) umfasst, **dadurch gekennzeichnet, dass**
die Rad-Sensoreinheit (S1, S2) auch zum Messen der Umlaufgeschwindigkeit des weiteren Hinterrads (10) ausgelegt ist; und
die Steuereinheit (40) dazu konfiguriert ist, das Soll-Antriebsmoment des Vorderrads (12) basierend auf einer kleineren der gemessenen Umlaufgeschwindigkeiten der Hinterräder (10) zu bestimmen.

## Claims

1. Method for controlling a road finishing machine (1) having a material bunker (2) for receiving paving material, a screed (3) for compressing paving material, a drivable rear wheel (10), and a drivable front wheel (12), comprising:
measuring a rotational speed of the rear wheel (10),
**characterized by**
measuring a travel speed of the road finishing machine (1);
calculating a target driving torque of the front wheel (12) based on the measured rotational speed of the rear wheel (10) and the measured travel speed of the road finishing machine (1); and
adjusting an actual driving torque of the front wheel (12) to the calculated target driving torque,
wherein the step of calculating the target driving torque comprises:
determining an actually transmitted driving torque of the rear wheel (10) based on the measured rotational speed of the rear wheel (10) and the measured travel speed of the road finishing machine (1); and
setting the target driving torque of the front wheel (12) to be proportional to the determined actually transmitted driving torque of the rear wheel (10).

2. Method according to claim 1, **characterized in that** the travel speed of the road finishing machine (1) is measured with a travel speed sensor unit (20) provided at the road finishing machine (1) and comprising at least one radar sensor (22).

3. Method according to claim 2, **characterized in that** a direction of detection (D) of the at least one radar sensor (22) is inclined downwards with respect to a horizontal plane.

4. Method according to claim 2 or 3, **characterized in that** the travel speed sensor unit (20) includes two radar sensors (22), a first radar sensor (22) being arranged at the road finishing machine (1) facing forward in the direction of travel (F), and a second radar sensor (22) being arranged at the road finishing machine (1) facing rearward in the direction of travel (F).

5. Method according to any one of the preceding claims, **characterized in that** the step of determining the actually transmitted driving torque of the rear wheel (10) comprises:
determining a slip of the rear wheel (10) based on the measured rotational speed of the rear wheel (10) and the measured travel speed; and
determining an actually transmitted driving torque of the rear wheel (10) corresponding to the determined slip of the rear wheel (10) by means of a stored data record.

6. Method according to claim 5, **characterized in that** the stored data record is a characteristic curve diagram.

7. Method according to any one of the preceding claims, **characterized in that** the rotational speeds of two rear wheels (10) of the road finishing machine (1) are measured; and the target driving torque of the front wheel (12) of the road finishing machine (1) is determined based on a smaller one of the rotational speeds of the rear wheels (10).

8. Road finishing machine (1), having:
a material bunker (2) for receiving paving material;
a screed (3) for compressing paving material;
a drivable rear wheel (10);
a drivable front wheel (12);
a wheel sensor unit (S1, S2) for measuring a rotational speed of the rear wheel (10),
**characterized by**
a travel speed sensor unit (20) for measuring a travel speed of the road finishing machine (1); and
a control unit (40) configured for:
calculating a target driving torque of the front wheel (12) based on the measured rotational speed of the rear wheel (10) and the measured travel speed of the road finishing machine (1); and
adjusting an actual driving torque of the front wheel (12) to the calculated target driving torque,
wherein the control unit (40) is configured to carry out the following, when calculating the target driving torque:
determining an actually transmitted driving torque of the rear wheel (10) based on the measured rotational speed of the rear wheel (10) and the measured travel speed of the road finishing machine (1); and
setting the target driving torque to be proportional to the determined actually transmitted driving torque of the rear wheel (10).

9. Road finishing machine according to claim 8, **characterized in that** the travel speed sensor unit (20) comprises at least one radar sensor (22).

10. Road finishing machine according to claim 9, **characterized in that** a direction of detection (D) of the at least one radar sensor (22) is inclined downwards with respect to a horizontal plane.

11. Road finishing machine according to any one of claims 8 to 10, **characterized in that** the travel speed sensor unit (20) includes two radar sensors (22), a first radar sensor (22) being arranged at the road finishing machine (1) facing forward in the direction of travel (F), and a second radar sensor (22) being arranged at the road finishing machine (1) facing rearward in the direction of travel (F).

12. Road finishing machine according to any one of claims 8 to 11, **characterized in that** the control unit (40) is configured to carry out the following, when determining the actually transmitted driving torque of the rear wheel (10):
determining a slip of the rear wheel (10) based on the measured rotational speed of the rear wheel (10) and the measured travel speed;
determining the actually transmitted driving torque of the rear wheel (10) corresponding to the determined slip of the rear wheel (10) by means of a data record stored in a characteristic curve diagram memory of the road finishing machine (1).

13. Road finishing machine according to any one of claims 8 to 12, further comprising another drivable rear wheel (10), **characterized in that**
the wheel sensor unit (S1, S2) is also configured to measure the rotational speed of the other rear wheel (10); and
the control unit (40) is configured to determine the target driving torque of the front wheel (12) based on a smaller one of the measured rotational speeds of the rear wheels (10).

## Revendications

1. Procédé de commande d'un finisseur routier (1) avec une trémie à matériau (2) permettant d'accueillir un matériau d'ouvrage, une table de réglage (3) permettant de compacter le matériau d'ouvrage, une roue arrière (10) pouvant être entraînée et une roue avant (12) pouvant être entraînée, comprenant une étape consistant à :
mesurer une vitesse de rotation de la roue arrière (10),
**caractérisé par** les étapes consistant à
mesurer une vitesse de déplacement du finisseur routier (1) ;
calculer un couple d'entraînement de consigne de la roue avant (12) en se basant sur la vitesse de rotation mesurée de la roue arrière (10) et sur la vitesse de déplacement mesurée du finisseur routier (1) ; et
ajuster un couple d'entraînement réel de la roue avant (12) sur le couple d'entraînement de consigne calculé,
dans lequel l'étape de calcul du couple d'entraînement de consigne comprend les étapes consistant à :
déterminer un couple d'entraînement réellement transmis de la roue arrière (10) en se basant sur la vitesse de rotation mesurée de la roue arrière (10) et sur la vitesse de déplacement mesurée du finisseur routier (1) ; et
définir le couple d'entraînement de consigne de la roue avant (12) de manière proportionnelle au couple d'entraînement réellement transmis déterminé de la roue arrière (10).

2. Procédé selon la revendication 1, **caractérisé en ce que** la vitesse de déplacement du finisseur routier (1) est mesurée avec une unité de détection de vitesse de déplacement (20) fournie au niveau du finisseur routier (1) et présentant au moins un capteur radar (22).

3. Procédé selon la revendication 2, **caractérisé en ce qu'**une direction de détection (D) du au moins un capteur radar (22) est inclinée vers le bas par rapport à un plan horizontal.

4. Procédé selon la revendication 2 ou 3, **caractérisé en ce que** l'unité de détection de vitesse de déplacement (20) comprend deux capteurs radar (22), dans lequel un premier capteur radar (22) est agencé au niveau du finisseur routier (1) de manière orientée vers l'avant dans la direction de déplacement (F) et un second capteur radar (22) est agencé au niveau du finisseur routier (1) de manière orientée vers l'arrière dans la direction de déplacement (F).

5. Procédé selon l'une quelconque des revendications précédentes, **caractérisé en ce que** l'étape de détermination du couple d'entraînement réellement transmis de la roue arrière (10) comprend les étapes consistant à :
déterminer un patinage de la roue arrière (10) en se basant sur la vitesse de rotation mesurée de la roue arrière (10) et sur la vitesse de déplacement mesurée ; et
déterminer un couple d'entraînement réellement transmis de la roue arrière (10) correspondant au patinage déterminé de la roue arrière (10) au moyen d'un jeu de données mémorisé.

6. Procédé selon la revendication 5, **caractérisé en ce que** le jeu de données mémorisé est un champ de caractéristiques.

7. Procédé selon l'une quelconque des revendications précédentes, **caractérisé en ce que** la vitesse de rotation des deux roues arrière (10) du finisseur routier (1) est mesurée ; et
le couple d'entraînement de consigne de la roue avant (12) du finisseur routier (1) est déterminé en se basant sur une plus petite des vitesses de rotation mesurées des roues arrière (10).

8. Finisseur routier (1), avec :
une trémie à matériau (2) permettant de recevoir un matériau d'ouvrage ;
une table de réglage (3) permettant de compacter le matériau d'ouvrage ;
une roue arrière (10) pouvant être entraînée ;
une roue avant (12) pouvant être entraînée ; et
une unité de détection de roue(S1, S2) permettant de mesurer une vitesse de rotation de la roue arrière (10),
**caractérisé par**
une unité de détection de vitesse de déplacement (20) permettant de mesurer une vitesse de déplacement du finisseur routier (1) ; et
une unité de commande (40) configurée pour :
calculer un couple d'entraînement de consigne de la roue avant (12) en se basant sur la vitesse de rotation mesurée de la roue arrière (10) et sur la vitesse de déplacement mesurée du finisseur routier (1) ; et
ajuster un couple d'entraînement réel de la roue avant (12) sur le couple d'entraînement de consigne calculé,
dans lequel l'unité de commande (40) est configurée pour, lors du calcul du couple d'entraînement de consigne, mettre en oeuvre les étapes ci-dessous consistant à :
déterminer un couple d'entraînement réellement transmis de la roue arrière (10) en se basant sur la vitesse de rotation mesurée de la roue arrière (10) et sur la vitesse de déplacement mesurée du finisseur routier (1) ; et
définir le couple d'entraînement de consigne de manière proportionnelle au couple d'entraînement réellement transmis déterminé de la roue arrière (10).

9. Finisseur routier selon la revendication 8, **caractérisé en ce que** l'unité de détection de vitesse de déplacement (20) présente au moins un capteur radar (22).

10. Finisseur routier selon la revendication 9, **caractérisé en ce qu'**une direction de détection (D) du au moins un capteur radar (22) est inclinée vers le bas par rapport à un plan horizontal.

11. Finisseur routier selon l'une quelconque des revendications 8 à 10, **caractérisé en ce que** l'unité de détection de vitesse de déplacement (20) comprend deux capteurs radar (22), dans lequel un premier capteur radar (22) est agencé au niveau du finisseur routier (1) de manière orientée vers l'avant dans la direction de déplacement (F) et un second capteur radar (22) est agencé au niveau du finisseur routier (1) de manière orientée vers l'arrière dans la direction de déplacement (F).

12. Finisseur routier selon l'une quelconque des revendications 8 à 11, **caractérisé en ce que** l'unité de commande (40) est configurée pour, lors de la détermination du couple d'entraînement réellement transmis de la roue arrière (10), mettre en oeuvre les étapes ci-dessous consistant à :
déterminer un patinage de la roue arrière (10) en se basant sur la vitesse de rotation mesurée de la roue arrière (10) et sur la vitesse de déplacement mesurée ;
déterminer le couple d'entraînement effectivement transmis de la roue arrière (10) correspondant au patinage déterminé de la roue arrière (10) au moyen d'un jeu de données stocké dans une mémoire de champ de caractéristiques du finisseur routier (1).

13. Finisseur routier selon l'une quelconque des revendications 8 à 12, comprenant en outre une roue arrière (10) pouvant être entrainée supplémentaire, **caractérisé en ce que**
l'unité de détection de roue (S1, S2) est également conçue pour mesurer la vitesse de rotation de la roue arrière (10) supplémentaire ; et
l'unité de commande (40) est configurée pour déterminer le couple d'entraînement de consigne de la roue avant (12) en se basant sur une plus petite des vitesses de rotation mesurées des roues arrière (10).
